# DEMANDE DE BREVET EUROPEEN

(11) **EP 4 564 491 A1**
(43) Date de publication de la demande: **04.06.2025**
(21) Numéro de dépôt: 23307093.7
(22) Date de dépôt: 30.11.2023
(51) Int. Cl.: H01M 10/04, H01M 50/103, H01M 50/119, H01M 50/159, H01M 50/169, H01M 10/0562, H01M 10/0565

(54) **PROCEDE D'ASSEMBLAGE D'UNE CELLULE DE BATTERIE**

(71) Demandeur: Automotive Cells Company SE, 33520 Bruges (FR)
(72) Inventeur: BRIEN, Patrick, 33290 Parempyre (FR); MARIN-CURTOUD, Rémi, 33100 Bordeaux (FR); MARATHE, Dimitri, 33310 Lormont (FR); DA SILVA, Teddy, 33200 Bordeaux (FR)
(74) Mandataire: Alatis

(57) **Abrégé**

L'invention concerne un procédé d'assemblage (10) d'un boîtier (12) d'une cellule de batterie, le boîtier comprenant un godet (14) présentant une ouverture et un couvercle (16) destiné à fermer l'ouverture du godet (14), le procédé d'assemblage (10) étant caractérisé en ce qu'il comprend au moins les étapes suivantes de : (1) positionnement du couvercle (16) et du godet (14) dans une chambre à vide (20) ; (II) application d'une pression prédéterminée dans un espace intérieur (24) de la chambre à vide (20), la pression prédéterminée étant strictement inférieure à la pression atmosphérique ; (III) scellement du couvercle (16) avec le godet (14) par des moyens de scellement (26) ; (IV) rétablissement de la pression atmosphérique dans l'espace intérieur (24) de la chambre à vide (20).

## Description

### DOMAINE TECHNIQUE DE L'INVENTION

L'invention concerne, de façon générale, le domaine technique des batteries à l'état solide et des batteries électriques destinées aux véhicules électriques ou hybrides.

L'invention se rapporte plus spécifiquement à un procédé d'assemblage de cellules de batteries à l'état solide utilisées dans les véhicules électriques.

### ÉTAT DE LA TECHNIQUE ANTÉRIEURE

Les véhicules automobiles à traction ou propulsion électrique ou hybride, comportent un ou plusieurs modules de batterie reliés à un réseau de puissance pour alimenter un moteur électrique (de traction ou de propulsion).

Chaque module de batterie comprend au moins une cellule électrochimique générant du courant par réaction chimique, par exemple une cellule de type lithium-ion.

Une cellule de batterie se présente sous la forme d'un boîtier métallique composé d'un godet rigide présentant une ouverture et d'une plaque formant le couvercle du godet, le couvercle et le godet assemblés délimitant un espace intérieur de la cellule.

Dans les cellules de batterie de type lithium-ion, le godet est rempli par au moins un empilement formé d'électrodes positives formant une cathode, d'électrodes négatives formant une anode et d'un séparateur disposé entre chaque paire d'électrodes. Une fois l'empilement inséré dans le godet, le couvercle de la cellule est scellé au godet.

Ensuite, un électrolyte liquide est injecté dans un trou d'insertion formé dans le couvercle de la cellule, de sorte que l'empilement baigne dans l'électrolyte, ce qui favorise le déplacement des électrons d'une électrode à l'autre. Enfin, le trou d'insertion du couvercle de la cellule est fermé et la cellule est scellée sous vide pour éviter l'introduction d'impuretés dans l'espace intérieur de la cellule.

Néanmoins, l'électrolyte liquide de la cellule est inflammable et peut endommager le reste de la batterie, notamment en périphérie de la cellule concernée.

Pour remédier à ce problème, on connaît des solutions proposant la fabrication de batteries à électrolyte entièrement solide, dans lesquelles les électrodes négatives et positives sont séparées par un électrolyte solide permettant de se dispenser d'un séparateur d'électrodes.

L'électrolyte solide n'est pas inflammable, mais, contrairement à l'électrolyte liquide, il n'occupe pas le volume total de la cellule, ce qui facilite l'introduction d'oxygène provenant de l'air ambiant dans les zones vides de l'espace intérieur de la cellule. Cette présence d'oxygène accélère l'oxydation des électrodes contenues et peut diminuer à terme la durée de vie de la batterie.
Par ailleurs, le vieillissement et/ou l'utilisation prolongée de la batterie peut provoquer des réactions chimiques indésirables dans la cellule. Ces réactions chimiques font augmenter la pression interne de la cellule et créer un effet de gonflement, appelé communément en termes anglosaxons « swelling effect ».

### EXPOSE DE L'INVENTION

L'invention vise à remédier à tout ou partie des inconvénients de l'état de la technique en proposant notamment un procédé d'assemblage d'une cellule de batterie à électrolyte entièrement solide, le procédé permettant de réduire l'effet de gonflement de la cellule et d'augmenter la durée de vie de la batterie dans laquelle elle est intégrée.

Pour ce faire est proposé, selon un premier aspect de l'invention, un procédé d'assemblage d'un boîtier d'une cellule de batterie, le boîtier comprenant un godet présentant une ouverture et un couvercle destiné à fermer l'ouverture du godet, le procédé d'assemblage étant caractérisé en ce qu'il comprend au moins les étapes suivantes de :
- (I) positionnement du couvercle et du godet dans une chambre à vide ;
- (II) application d'une pression prédéterminée dans un espace intérieur de la chambre à vide, la pression prédéterminée étant strictement inférieure à la pression atmosphérique ;
- (III) scellement du couvercle avec le godet par des moyens de scellement ;
- (IV) rétablissement de la pression atmosphérique dans l'espace intérieur de la chambre à vide.

La cellule de batterie présente un boitier rigide, et est de préférence une cellule dite « prismatique », c'est-à-dire que le godet de la cellule est un parallélépipède rectangle comportant une ouverture. Le godet est en matériau(x) métallique(s), par exemple formé à partir d'alliages d'aluminium ou d'aciers inoxydables. Le boîtier de la cellule de batterie est de préférence constitué du godet et du couvercle.

L'invention fournit ainsi un procédé d'assemblage de boîtiers de cellules de batterie permettant de limiter les effets de gonflement des boîtiers et ne nécessitant pas davantage d'étapes qu'un procédé d'assemblage connu dans l'état de l'art. En effet, en fermant le boîtier lors du scellement du couvercle sur le godet tandis que celui-ci est placé dans la chambre à vide avec une pression interne prédéterminée strictement inférieure à la pression atmosphérique, on obtiendra une cellule fermée dont l'espace intérieur dans lequel sont placés électrodes et électrolyte, présente une pression interne également strictement inférieure à la pression atmosphérique permettant de compenser des effets de gonflement pendant une durée plus importante.

Selon un mode de réalisation, l'étape (I) de positionnement du couvercle et du godet dans la chambre à vide est précédée d'une étape (i) de remplissage du godet par un composant de batterie sec. Le composant de batterie sec comprend notamment un empilement d'électrodes positives et d'électrodes négatives séparées par un électrolyte solide.

Selon un mode de réalisation, l'étape (I) de positionnement du couvercle et du godet dans la chambre à vide est précédée d'au moins une étape (ii) de positionnement du godet de la cellule sur une table de travail d'un outillage. L'outillage comprend une table de travail. Le godet est positionné sur la table de travail pour être placé dans la chambre à vide. De préférence, la table de travail contient des moyens de maintien permettant le placement du godet sur une surface spécifique de la table de travail. De façon optionnelle, les moyens de maintien contiennent un système de compression exerçant une précontrainte sur le godet, la précontrainte permettant de limiter les effets de gonflement de la cellule après son scellement.

Selon un mode de réalisation, que la chambre à vide comporte une enceinte rigide délimitant avec la table de travail l'espace intérieur de la chambre à vide. La chambre à vide est de de préférence de forme parallélépipédique et peut présenter une ouverture, l'ouverture étant fermée par la table de travail lors de l'étape (I) de positionnement du couvercle et du godet dans la chambre à vide. L'espace intérieur de la chambre à vide forme espace fermé lorsque l'étape (I) de positionnement du couvercle et du godet dans la chambre à vide est réalisée.

Selon un mode de réalisation, l'outillage comporte un dispositif convoyeur, la table de travail se déplaçant suivant un chemin de convoyage entraînée par le dispositif convoyeur. L'installation d'un dispositif convoyeur amenant la ou les table(s) de travail permet de définir une cadence d'acheminement des godets dans la chambre à vide, un tel dispositif de convoyage étant particulièrement adapté aux assemblages à la chaîne ou en série de boîtiers de cellules de batteries.

Selon un mode de réalisation, la pression prédéterminée dans l'espace intérieur de la chambre à vide est appliquée par des moyens de contrôle de la pression comprenant par exemple au moins une pompe à vide, de préférence une pompe à déplacement positif. La pompe à vide est reliée à l'espace intérieur de la chambre à vide, par exemple par l'intermédiaire d'un tuyau de la pompe à vide s'insérant dans une ouverture de la chambre à vide. Dans le cas d'un assemblage à la chaîne, la pompe à vide est automatisée pour appliquer la pression prédéterminée pendant une durée prédéterminé puis pour rétablir la pression atmosphérique dans l'espace intérieur de la chambre à vide, et ce, à intervalles réguliers.

Selon un mode de réalisation, la pression prédéterminée appliquée dans l'espace intérieur de la chambre à vide est inférieure ou égale à 1 Pa, de préférence inférieure ou égale à 10⁻² Pa, de préférence encore inférieure ou égale à 10⁻⁵ Pa. En pratique, la pompe à vide applique progressivement une pression dans l'espace intérieur de la chambre à vide jusqu'à atteindre la pression prédéterminée. L'application d'une pression inférieure à celle de la pression atmosphérique permet de diminuer la quantité d'oxygène présente à l'intérieur du boîtier de la cellule et ainsi de limiter les risques d'oxydation des électrodes du boîtier une fois le boîtier scellé.

Selon un mode de réalisation, le scellement du couvercle avec le godet par les moyens de scellement est un scellement étanche au(x) gaz. Selon un mode de réalisation préférentiel, l'étanchéité du scellement du couvercle avec le godet est vérifiée par un test d'étanchéité à l'hélium.

Selon un mode de réalisation, pour ne pas introduire de gaz parasites dans le boîtier de la cellule, les moyens de scellement se situent à l'extérieur de la chambre à vide.

Selon un mode de réalisation, les moyens de scellement comprennent au moins un laser, l'étape de scellement du couvercle avec le godet comportant une étape de soudage laser. L'utilisation d'une chambre à vide pour réaliser l'étape de soudage laser du couvercle avec le godet permet d'obtenir un procédé d'assemblage efficace, nécessitant moins d'énergie et produisant moins de projections qu'un soudage laser réalisé à l'air ambiant. Le soudage laser permet de conserver au mieux les propriétés mécaniques du boîtier après son scellement. En particulier, le laser comprend un laser à solide ou à gaz. Le laser à solide ou à gaz se trouve en face d'une paroi ou d'une fenêtre translucide, de préférence transparente de la chambre à vide et est de préférence, fixé à la chambre à vide à l'aide d'une interface de transmission de manière à se déplacer simultanément avec la chambre à vide. Le laser se déplace suivant des directions longitudinales et transversales par rapport à la paroi ou à la fenêtre de la chambre à vide. De préférence, le laser soude le contour extérieur du couvercle du boîtier, suivant un chemin prédéfini. Ainsi, lors d'un assemblage à la chaîne, l'opération de soudage du boîtier est automatisée.

Selon un mode de réalisation, postérieurement à l'étape de scellement du couvercle avec le godet par des moyens de scellement, le boîtier délimite un espace intérieur fermé présentant une pression interne inférieure ou égale à 1 Pa, de préférence inférieure ou égale à 10⁻² Pa, de préférence encore inférieure ou égale à 10⁻⁵ Pa. Le procédé d'assemblage permet à l'espace intérieur du boîtier de ne renfermer qu'une très faible quantité de de dioxygène, garantissant ainsi un scellement hermétique aux gaz.

Selon un mode de réalisation, l'enceinte de la chambre à vide est au moins en partie mobile entre une position ouverte et une position fermée, la position ouverte permettant à l'étape (I) de positionnement du couvercle et du godet dans l'espace intérieur de la chambre à vide d'être réalisée. L'enceinte désigne les parois de la chambre à vide.

Selon un mode de réalisation adapté à la production à la chaîne, l'intégralité de l'enceinte est mobile au moins verticalement entre la position ouverte, et la position fermée. Selon un autre mode de réalisation, l'enceinte comprend au moins une ouverture mobile entre une position ouverte et une position fermée.

Selon un autre aspect, l'invention concerne également un ensemble d'assemblage comportant au moins une chambre à vide, des moyens de contrôle de la pression intérieure de la chambre à vide et des moyens de scellement, l'ensemble d'assemblage étant caractérisé en ce qu'il est configuré pour mettre en oeuvre le procédé d'assemblage d'un boîtier d'une cellule de batterie tel que décrit ci-avant.

Selon un autre aspect, l'invention concerne également une cellule de batterie obtenue directement par le procédé d'assemblage tel que décrit ci-avant.

Selon un mode de réalisation le boitier délimite un espace intérieur fermé présentant une pression interne inférieure ou égale à 1 Pa, de préférence inférieure ou égale à 10⁻² Pa, de préférence encore inférieure ou égale à 10⁻⁵ Pa.

### BRÈVE DESCRIPTION DES FIGURES

D'autres caractéristiques et avantages de l'invention ressortiront à la lecture de la description qui suit, en référence aux figures annexées, qui illustrent :
- figure 1: un logigramme présentant des étapes d'un procédé d'assemblage d'un boîtier d'une cellule de batterie selon un mode de réalisation ;
- figure 2 : une vue schématique d'un ensemble d'assemblage pour mettre en oeuvre le procédé d'assemblage de la figure 1, selon un premier mode de réalisation de l'invention ;
- figure 3 : une vue schématique d'un ensemble d'assemblage pour mettre en oeuvre le procédé d'assemblage de la figure 1, selon un deuxième mode de réalisation de l'invention ;
- figure 4 : une vue schématique d'un ensemble d'assemblage pour mettre en oeuvre le procédé d'assemblage de la figure 1, selon un troisième mode de réalisation de l'invention ;
- figure 5 : une vue schématique des moyens de contrôle de la pression comprenant une pompe à vide.

Pour plus de clarté, les éléments identiques ou similaires sont repérés par des signes de référence identiques sur l'ensemble des figures.

Dans la description et les revendications, pour clarifier la description et les revendications, on adoptera à titre non limitatif la terminologie longitudinal, transversal et vertical en référence au trièdre X, Y, Z indiqué aux figures.

### DESCRIPTION DÉTAILLÉE D'UN MODE DE RÉALISATION

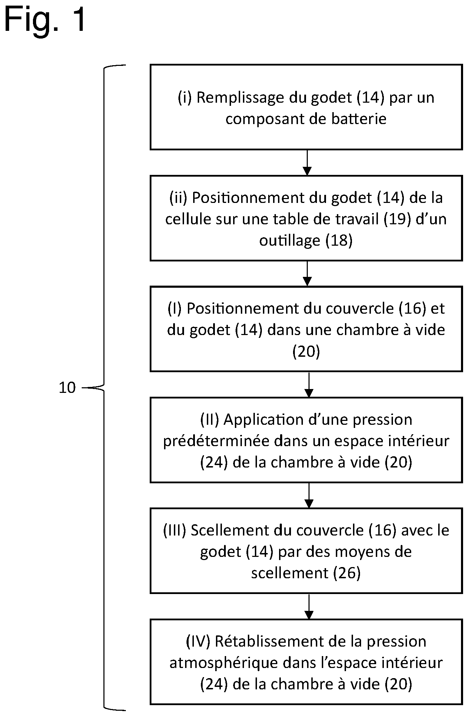

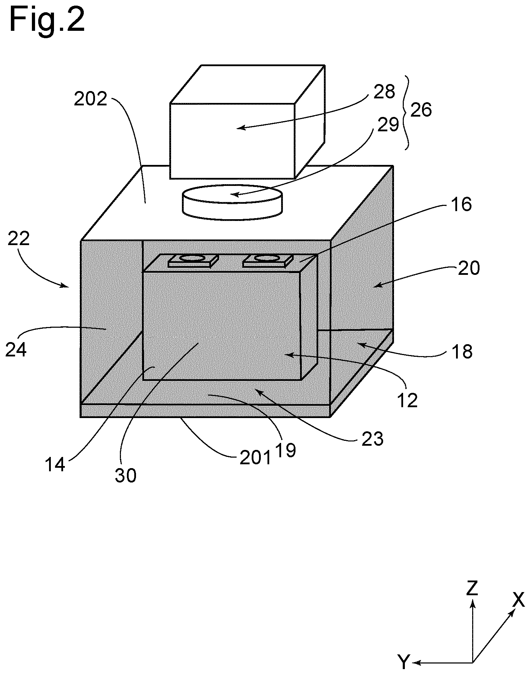

La figure 1 illustre les étapes d'un procédé d'assemblage **10** d'un boîtier 12 d'une cellule de batterie, le procédé **10** pouvant être adapté à différents modes de réalisation représentés sur les figures 2, 3 et 4.

Le boîtier **12** de cellule du procédé d'assemblage **10** est constitué d'un godet **14** et d'un couvercle **16.** Le godet **14** est parallélépipédique et fait en matériau(x) métallique(s), par exemple en aluminium ou en aciers inoxydables. Il présente une ouverture sur une face supérieure du parallélépipède, l'ouverture étant destinée à être fermée par le couvercle **16.** Le couvercle **16** du boîtier **12** de cellule comporte une borne positive et une borne négative permettant de relier électriquement en série ou en parallèle la cellule à d'autres cellules après assemblage du boîtier **12.**

Une étape (i) amont du procédé d'assemblage **10** consiste à remplir le godet **14** d'un composant de batterie tel qu'un composant de batterie sec, le composant étant formé d'électrodes positives, d'électrodes négatives et d'un électrolyte solide intégré dans les électrodes positives et négatives.

Durant une étape (ii) du procédé **10,** postérieure à l'étape (i), le godet **14,** recouvert du couvercle **16** du boîtier **12** est positionné sur un outillage **18.** À cette étape du procédé **10,** aucune contrainte n'est appliquée entre le couvercle **16** et le godet **14.** Alternativement, on peut également procéder au remplissage (i) postérieurement au positionnement (ii) du godet **14** sur l'outillage **18,** toutefois, dans ce cas, l'étape de remplissage serait de nature à ralentir la chaîne de production lors d'un assemblage en série.

Selon le mode de réalisation de la figure 2, l'outillage **18** comporte une table de travail **19** destinée à supporter, et de préférence également à immobiliser le godet **14** du boîtier **12** de la cellule.

La table de travail **19** comprend une plaque rectangulaire faite en matériau(x) plastique(s) et/ou métallique(s), de préférence en matériau(x) uniquement métallique(s). La plaque comporte des moyens de maintien, par exemple un cadre rectangulaire, des pinces ou tout autre instrument permettant de maintenir en place le godet **14** du boîtier **12.** Selon un mode de réalisation, les moyens de maintien (non illustrés) sont directement formés sur la plaque de la table de travail **19.** Selon un autre mode de réalisation, les moyens de maintien peuvent être rapportés sur la plaque à l'aide d'éléments de fixation, par exemple des vis. Les moyens de maintien peuvent en outre comporter un système de compression du godet **14** destiné à exercer une précontrainte sur des faces latérales du godet **14.**

Durant une étape (I) du procédé, postérieure aux étapes (i) et (ii), l'outillage **18** supportant le godet **14** recouvert du couvercle **16** est placé sur une paroi inférieure **201** d'une chambre à vide **20** formant la table de travail. La table de travail **19** peut être fixée à demeure sur la paroi inférieure **201** de la chambre à vide **20.** Selon un autre mode de réalisation, la table de travail **19,** une fois installée dans la chambre à vide **20,** forme la paroi inférieure **201** de la chambre à vide **20.**

Selon le mode de réalisation de la figure 2, la chambre à vide **20** comporte une enceinte rigide, ici parallélépipédique **22,** formée de parois rigides, parmi lesquelles une paroi supérieure **202** est translucide, de préférence aussi transparente, et une paroi frontale sur la figure 2 formant une porte mobile **23** entre une position ouverte et une position fermée. Bien entendu, dans d'autres modes de réalisation, la chambre à vide pourra être de forme quelconque. La porte mobile **23** offre un accès à un opérateur pouvant le cas échéant avoir accès au boîtier. Les parois et la porte mobile **23** de la chambre à vide **20** forment une enceinte **22** en partie mobile entre une position ouverte et une position fermée. De préférence, la porte mobile **23** se trouve sur une face latérale de la chambre à vide **20.** La porte mobile **23** peut être :
- une porte reliée à une charnière permettant la rotation de la porte autour d'une arête de la chambre à vide **20 ;** ou
- une porte coulissant verticalement ou longitudinalement par rapport aux parois inférieure **201** et supérieure **202** de la chambre à vide **20.**

Une fois l'enceinte **22** en position fermée, elle délimite avec la table de travail **19** un espace intérieur **24** de la chambre à vide **20.** Un système de verrouillage (non représenté sur les figures) permet de maintenir dans un état verrouillé la fermeture de la porte mobile **23** de l'enceinte **22** pour assurer l'étanchéité au(x) gaz dans l'espace intérieur **24** de la chambre à vide **20.** Un système de sécurité peut être ajouté en association avec ce système de fermeture, par exemple un bouton d'urgence ou bouton « coup de poing ».

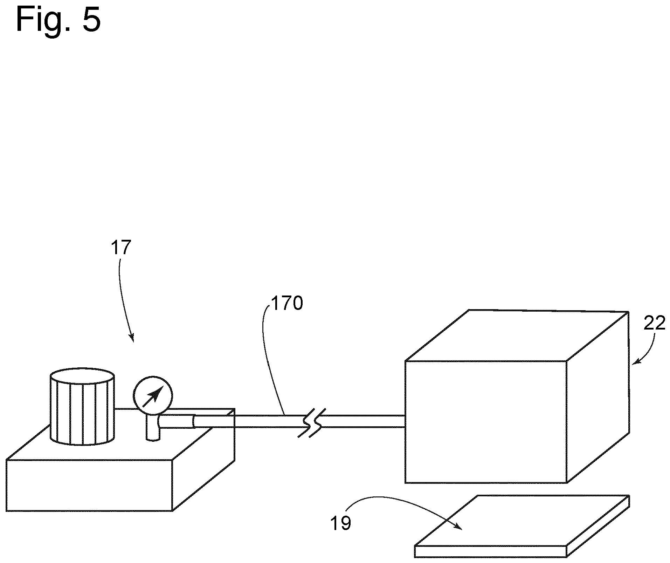

Une étape (II) du procédé d'assemblage **10** consiste à appliquer ultérieurement à l'étape (I), une pression prédéterminée dans l'espace intérieur **24** de la chambre à vide **20.** La chambre à vide **20** est reliée à un tuyau **170** d'une pompe à vide **17** (représentée sur la figure 5) placée à distance de la chambre à vide **20.** La pompe à vide **17** peut être une pompe à déplacement positif, ou une pompe volumétrique. La pompe à vide **17** est apte à appliquer une pression dans l'espace intérieur **24** de la chambre à vide **20** jusqu'à atteindre la pression prédéterminée. En pratique, la pression prédéterminée est inférieure ou égale à 1 Pa, de préférence inférieure ou égale à 10⁻² Pa, de préférence encore inférieure ou égale à 10⁻⁵ Pa.

Durant une étape (III) du procédé, ultérieure à l'étape (II), le couvercle **16** est scellé au godet **14** du boîtier **12** de cellule à l'aide de moyens de scellement **26.** Les moyens de scellement **26** comportent un laser **28** fixé à distance de la paroi supérieure transparente **202** de la chambre à vide, et une interface de transmission laser **29,** le laser **28** comprenant un laser à solide ou à gaz. Le laser **28** est apte à se déplacer suivant des directions transversales et verticales par rapport à la paroi supérieure transparente **202** de la chambre à vide **20,** de manière à souder le couvercle **16** et le godet **14** pour obtenir un boîtier **12** fermé étanche aux gaz. Après le scellement du godet **14** et du couvercle **16,** le boîtier **12** délimite un espace intérieur fermé **30** dans lequel la pression interne est inférieure ou égale à 1 Pa, de préférence inférieure ou égale à 10⁻² Pa, de préférence encore inférieure ou égale à 10⁻⁵ Pa. Bien entendu, selon la position du boîtier **12** dans l'espace intérieur **24,** la paroi transparente peut équiper une autre paroi que la paroi supérieure.

De façon générale, l'enceinte **22** est munie d'une fenêtre translucide, de préférence transparente, configurée pour permettre l'action des moyens de scellement tels que le laser pour le scellement du couvercle **16** au godet **14.** Des moyens de redirection du ou des rayons laser pourront également équiper l'espace intérieur **24** de la chambre à vide. Ces moyens de redirection peuvent être des miroirs réfléchissants et peuvent être commandés par des moyens de déplacement pour contrôler leur position, par exemple leur orientation. Cela permet notamment de pouvoir déplacer le rayon laser sans dépendre de la dimension de la fenêtre de l'enceinte **22.**

Une fois le boîtier fermé de façon étanche, une étape (IV) du procédé **10** consiste à rétablir la pression atmosphérique dans l'espace intérieur **24** de la chambre à vide **20.** Pour réaliser cette étape, la pompe à vide **17** est désactivée et/ou l'enceinte **22** passe d'une position fermée à une position ouverte.

Une unité de commande de pression peut contrôler la pression dans l'espace intérieur **24** de la chambre à vide **20** pour autoriser les étapes de scellement du couvercle **16** avec le godet **14** et de rétablissement de la pression atmosphérique dans l'espace intérieur **24** de la chambre à vide **20.**

Le procédé d'assemblage **10** représenté selon le mode de réalisation de la figure 2 est prévu de façon avantageuse pour un chargement manuel ou robotisé de la chambre à vide **20,** procédé **10** dans lequel un opérateur ou un bras de robot doit placer et retirer chaque boîtier **12** de la chambre à vide **20.**

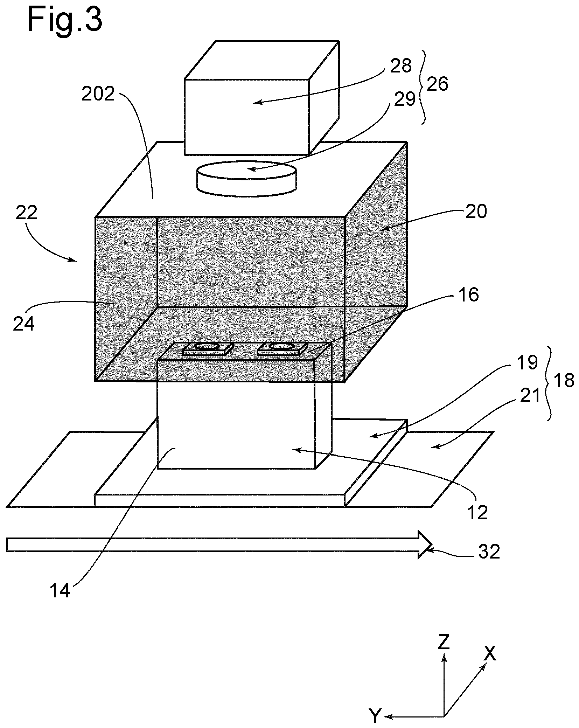

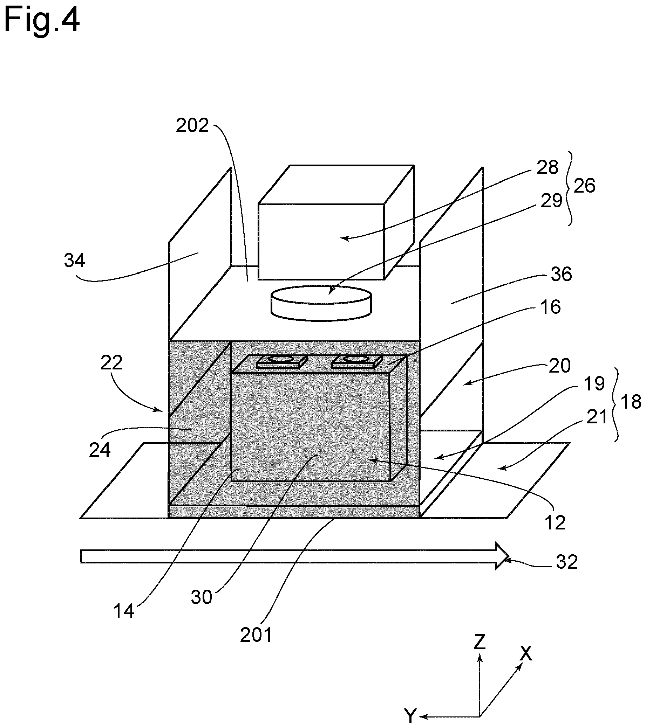

Les figures 3 et 4 représentent le procédé d'assemblage **10** de la figure 1 selon un deuxième et un troisième modes de réalisation, particulièrement avantageux pour la production à la chaîne ou en série de boîtiers **12** de cellules.

Les modes de réalisations du procédé d'assemblage **10** des figures 3 et 4 diffèrent de celui représenté sur la figure 1 essentiellement en ce que, lors de l'étape (ii) de positionnement du godet **14** sur l'outillage **18,** le godet **14** est positionné sur la table de travail **19** qui est elle-même acheminée dans la chambre à vide **20** à l'aide d'un dispositif convoyeur **21,** la table de travail **19** se déplaçant sur le dispositif convoyeur **21** suivant un chemin de convoyage **32** transversal à la chambre à vide **20.** Le dispositif convoyeur **21** est immobilisé lorsque la table de travail **19** est positionnée de sorte à former, avec l'enceinte **22** en position de fermeture, l'espace intérieur **24** de la chambre à vide **20.** De préférence, pour un assemblage en série ou à la chaîne, le dispositif convoyeur **21** est commandé pour s'arrêter à intervalles de temps réguliers sur une durée déterminée et/ou contient des capteurs de position permettant de repérer la position de la table de travail **19** par rapport à l'enceinte **22.**

De plus, selon le mode de réalisation de la figure 3, lors de l'étape (I) de positionnement du couvercle **16** et du godet **14** dans la chambre à vide **20,** l'enceinte **22** de la chambre à vide **20** est entièrement mobile, au moins verticalement, entre la position ouverte, permettant l'acheminement de la table de travail **19** supportant le godet **14** par le dispositif convoyeur **21,** et la position fermée, dans laquelle l'enceinte **22** et la table de travail forment l'espace intérieur **24** de la chambre à vide **20.** L'enceinte **22** peut de plus être mobile en rotation autour d'un axe de charnière permettant à l'enceinte **22** de passer de la position ouverte à la position fermée telles que décrites ci-avant.

L'étape (I) de positionnement du couvercle **16** et du godet **14** dans la chambre à vide **20** représentée sur le mode de réalisation de la figure 4 diffère de celle de la figure 3 en ce que l'enceinte **22** contient deux ouvertures opposées (**34, 36**) mobiles entre la position ouverte et la position fermée. De préférence, les ouvertures opposées (**34, 36**) sont deux parois de l'enceinte **22,** les deux parois étant mobiles verticalement. Selon un autre mode de réalisation, les ouvertures opposées (**34, 36**) sont mobiles en rotation autour d'axes de charnières. En position ouverte, les deux ouvertures (**34, 36**) de l'enceinte **22** permettent l'acheminement du godet **14** et de la table de travail **19** dans la chambre à vide **20.** En position fermée, les deux ouvertures (**34, 36**) de l'enceinte **22** ferment la chambre à vide **20** de manière étanche. De préférence, pour faciliter l'automatisation et la production en série ou à la chaîne, les deux ouvertures mobiles (**34, 36**) translatent simultanément et sont contrôlées par un dispositif de contrôle.

Dans le cas d'un assemblage à la chaîne ou en série de boîtiers **12,** les mouvements et déplacements de l'enceinte **22** et du dispositif convoyeur **21** sont pilotés et synchronisés par des moyens de contrôle de manière à optimiser la production. Par exemple, l'enceinte **22** est maintenue en position ouverte, pendant que le dispositif convoyeur **21** est en mouvement jusqu'à faire parvenir la table de travail **19** au niveau de l'enceinte **22.** Puis l'enceinte **22** passe dans une position fermée pendant un intervalle de temps correspondant au temps de réalisation des étapes (II), (III) et optionnellement (IV) du procédé **10.** L'enceinte **22** est rétablie dans une position ouverte et le dispositif y achemine une autre table de travail **19.**

Un tel procédé d'assemblage peut être intégré dans une ligne de production de batteries, la ligne de production comprenant par exemple une station de production du godet et du couvercle, une station de remplissage du godet, une station d'assemblage des boîtiers de cellules de batterie suivant le procédé d'assemblage **10** mis en place dans les modes de réalisation des figures 3 et 4 et une station d'assemblage de modules de batterie à partir des boîtiers obtenus selon le procédé d'assemblage **10.**

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Procédé d'assemblage (10) d'un boîtier (12) d'une cellule de batterie, le boîtier comprenant un godet (14) présentant une ouverture et un couvercle (16) destiné à fermer l'ouverture du godet (14), le procédé d'assemblage (10) étant **caractérisé en ce qu'**il comprend au moins les étapes suivantes de :
- (I) positionnement du couvercle (16) et du godet (14) dans une chambre à vide (20) ;
- (II) application d'une pression prédéterminée dans un espace intérieur (24) de la chambre à vide (20), la pression prédéterminée étant strictement inférieure à la pression atmosphérique ;
- (III) scellement du couvercle (16) avec le godet (14) par des moyens de scellement (26) ;
- (IV) rétablissement de la pression atmosphérique dans l'espace intérieur (24) de la chambre à vide (20).

2. Procédé d'assemblage (10) selon la revendication 1, **caractérisé en ce que** l'étape (I) de positionnement du couvercle (16) et du godet (14) dans la chambre à vide (20) est précédée d'une étape (i) de remplissage du godet (14) par un composant de batterie sec.

3. Procédé d'assemblage (10) selon la revendication 1 ou 2, **caractérisé en ce que** l'étape (I) de positionnement du couvercle (16) et du godet (14) dans la chambre à vide (20) est précédée d'au moins une étape (ii) de positionnement du godet (14) de la cellule sur une table de travail (19) d'un outillage (18).

4. Procédé d'assemblage (10) selon la revendication précédente, **caractérisé en ce que** la chambre à vide (20) comporte une enceinte rigide (22) délimitant avec la table de travail (19) l'espace intérieur (24) de la chambre à vide (20).

5. Procédé d'assemblage (10) selon la revendication 3 ou 4, **caractérisé en ce que** l'outillage (18) comporte un dispositif convoyeur (21), la table de travail (19) se déplaçant suivant un chemin de convoyage (32) entraînée par le dispositif convoyeur (21).

6. Procédé d'assemblage (10) selon l'une quelconque des revendications précédentes, **caractérisé en ce que** la pression prédéterminée dans l'espace intérieur (24) de la chambre à vide (20) est appliquée par des moyens de contrôle de la pression comprenant par exemple une pompe à vide (17), de préférence une pompe à déplacement positif ou une pompe volumétrique.

7. Procédé d'assemblage (10) selon l'une quelconque des revendications précédentes, **caractérisé en ce que** la pression prédéterminée appliquée dans l'espace intérieur (24) de la chambre à vide (20) est inférieure ou égale à 1 Pa, de préférence inférieure ou égale à 10⁻² Pa, de préférence encore inférieure ou égale à 10⁻⁵ Pa.

8. Procédé d'assemblage (10) selon l'une quelconque des revendications précédentes, **caractérisé en ce que** le scellement du couvercle (16) avec le godet (14) par les moyens de scellement (26) est un scellement étanche au(x) gaz.

9. Procédé d'assemblage (10) selon l'une quelconque des revendications précédentes, **caractérisé en ce que** les moyens de scellement (26) se situent à l'extérieur de la chambre à vide (20).

10. Procédé d'assemblage (10) selon l'une quelconque des revendications précédentes, **caractérisé en ce que** les moyens de scellement (26) comprennent au moins un laser (28), l'étape de scellement du couvercle (16) avec le godet (14) comportant une étape de soudage laser.

11. Procédé d'assemblage (10) selon la revendication 10, **caractérisé en ce que** le laser (18) comprend un laser à solide ou à gaz.

12. Procédé d'assemblage (10) selon l'une quelconque des revendications précédentes, **caractérisé en ce que**, postérieurement à l'étape de scellement du couvercle (16) avec le godet (14) par des moyens de scellement (26), le boîtier (12) délimite un espace intérieur fermé (30) présentant une pression interne inférieure ou égale à 1 Pa, de préférence inférieure ou égale à 10⁻² Pa, de préférence encore inférieure ou égale à 10⁻⁵ Pa.

13. Procédé d'assemblage (10) selon l'une quelconque des revendications précédentes, **caractérisé en ce que** l'enceinte (22) de la chambre à vide (20) est au moins en partie mobile entre une position ouverte et une position fermée, la position ouverte permettant à l'étape (I) de positionnement du couvercle (16) et du godet (14) dans l'espace intérieur (24) de la chambre à vide (20) d'être réalisée.

14. Ensemble d'assemblage comportant au moins une chambre à vide (20), des moyens de contrôle de la pression intérieure de la chambre à vide (20) et des moyens de scellement, l'ensemble d'assemblage étant **caractérisé en ce qu'**il est configuré pour mettre en oeuvre le procédé d'assemblage (10) d'un boîtier (12) d'une cellule de batterie selon l'une quelconque des revendications précédentes.

15. Cellule de batterie **caractérisée en ce qu'**elle est obtenue directement par le procédé d'assemblage (10) selon l'une quelconque des revendication 1 à 13, le boitier (12) délimitant un espace intérieur fermé (30) présentant de préférence une pression interne inférieure ou égale à 1 Pa, de préférence encore inférieure ou égale à 10⁻² Pa, de préférence encore inférieure ou égale à 10⁻⁵ Pa.
